# EUROPEAN PATENT APPLICATION

(11) **EP 3 378 759 A1**
(43) Date of publication of application: **26.09.2018**
(21) Application number: 17162649.2
(22) Date of filing: 23.03.2017
(51) Int. Cl.: B64C 9/16, B64C 13/30, B64C 13/34, B64C 9/20, F16H 25/20

(54) **AIRFOIL TRAILING EDGE HIGH-LIFT DEVICE AND ACTUATION SYSTEM THEREFORE**

(71) Applicant: Asco Industries NV, 1930 Zaventem (BE); Deutsches Zentrum für Luft- und Raumfahrt e.V., 51147 Köln (DE)
(72) Inventor: Vervliet, Antoon Marcel, 1930 Zaventem (BE); Raets, Michaël, 1930 Zaventem (BE); Quettier, Gaël Thierry Eric Maurice Ghislain, 1930 Zaventem (BE); Wild, Jochen Wolfram, 51147 Köln (DE); Everaert, Bob Armand Henri, 1930 Zaventem (BE)
(74) Representative: V.O.

(57) **Abstract**

Airfoil trailing edge high-lift device comprising at least one flap, wherein said flap is movable between a retracted position and at least one deployed position, and is arranged to be actuated by an actuation system comprising at least one rib which is mountable to an airfoil, wherein the rib comprises a track along which the trailing edge high-lift device is adjustable between a retracted position in which the trailing edge high-lift device is substantially partly inside the airfoil, and at least one deployed position in which the trailing edge high-lift device is substantially outside of the airfoil; comprising an adjustment mechanism arranged to adjust the trailing edge high-lift device along the track.

## Description

The invention relates to an actuation system for an airfoil trailing edge high-lift device.

Airfoil trailing edge high-lift devices are generally used in airfoils. They can be moved between a retracted position and at least one deployed position, in which they are arranged to improve the aerodynamic performance of the aircraft in terms of increased lift coefficient for reduced flight speed, for example during take-off, climb, descent or landing. In deployed position, the trailing edge high-lift device provides for additional aerodynamic forces during certain stages of a flight, in particular during low speed stages. Trailing edge high-lift devices can be embodied as a flap, e.g. single slotted flaps or double slotted flaps. Many embodiments of high-lift devices can be possible.

Such trailing edge high-lift devices are typically actuated by an actuation system, allowing the trailing edge high-lift devices to be adjusted between a retracted position in which the trailing edge high-lift device is substantially partly inside the airfoil, for example during cruise, and at least one deployed position in which the trailing edge high-lift device is substantially outside of the airfoil, for example during take-off or landing.

Such actuation systems are generally known from prior art, such as for example described in Rudolph, P.K.C, High-Lift Systems on Commercial Subsonic Airliners, NASA CR 4746, 1996. A slotted flap is described in US 1,670,852. Many variants of these actuations systems are known, for example a dropped hinge system, e.g. patent US 2,908,454, a four-bar linkage system, e.g. patent US 4,049,219, or a beam-carriage system, e.g. patent US 2,405,726, and linked track, e.g. patent US 4,452,869.

Prior art systems have either no slot, e.g. patents US 1,392,005, US 2,404,895 or there is a slot perpendicular to the flow direction that is always created between the airfoil and the flap when the flap is in semi-extended or extended position. During landing a slot is beneficial as it increases significantly the lift coefficient and therefore reduces efficiently the flight speed. During take-off opening of the slot results in an unwanted increase in drag, leading to a need for increased runway lengths, a reduced initial climb-out flight path angle causing additional noise on the ground as well as a fuel consumption increase during that flight phase. Another disadvantage of known actuation systems is that they need a relatively large fairing outside the airfoil causing unwanted drag in retracted position and cruise flight conditions, increasing fuel consumption and therefore costs. Prior art actuation systems can also be relatively complex, which may raise maintenance costs and increase the risk of failure.

It is an aim of the present invention to solve or alleviate one or more of the above-mentioned problems. Particularly, the invention aims at providing an improved actuation system for an airfoil trailing edge high-lift device which is compact, with relatively few components and/or which may be aimed at allowing an improved positioning of a relatively large trailing edge high-lift device with respect to the airfoil, especially during take-off.

To these aims, there is provided an actuation system for an airfoil trailing edge high-lift device according to claim 1. In particular, the actuation system for an airfoil trailing edge high-lift device according to the invention comprises at least one rib which is mountable to an airfoil, wherein the rib comprises a curved track along which the trailing edge high-lift device is adjustable between a retracted position in which the trailing edge high-lift device is substantially partly inside the airfoil, and at least one deployed position in which the trailing edge high-lift device is substantially outside of the airfoil.

The actuation system also comprises an adjustment mechanism arranged to adjust the trailing edge high-lift device along the curved track, wherein the adjustment mechanism comprises a connection element which is mountable to the trailing edge high-lift device and arranged to provide a movable connection of said trailing edge high-lift device to the rib, wherein the adjustment mechanism further comprises a linear screw rod and a carriage which is movable along said linear screw rod, wherein said carriage is hingedly connected, such as pin-jointed or pivot-mounted, to said connection element.

Such an actuation system includes relatively few components, which decreases the risk of failure, and reduces maintenance hours and costs. At the same time, the actuation system is relatively compact, slightly reducing the wet area and hence the total drag on the aircraft. Due to the curved track, the positioning of the trailing edge high-lift device with respect to the airfoil during take-off can be such that a slot between said device and the airfoil, on at least one side of the wing but preferably both upper and lower side, is relatively small, or can even be avoided, thus improving lift-to-drag ratio during take-off, which enables relatively steep initial climb-outs beneficial in terms of noise perception on the ground with relatively short take-off lengths.

The actuation system is configured to adjust the high-lift device along the curved track between a retracted position and a fully deployed position, or any position in between. Advantageously, the high-lift device can be adjusted to an intermediate or semi-deployed position in which the high-lift device is outside of the airfoil. Typically, the semi-deployed position is used during take-off. By providing the actuation system according to the invention, a gap in the semi-deployed take-off position can be minimized or even avoided, while opening a gap for the fully deflected landing position to retain the benefits of the gap for lift generation. The gap is understood to be a gap between the airfoil and the flap in chordwise direction of the airfoil.

In a preferred embodiment, the hinged connection between said carriage and said connection element can be located substantially below said track. More preferably, the adjustment mechanism can substantially be located below said track, thus providing a relatively simple and compact actuation system, with relatively few components, and without a need for complex linkage mechanisms, while still being able to cover a relatively large extension of the trailing edge high-lift device.

It is also preferred that the linear screw rod is substantially entirely located within the wing formed by the airfoil and the flap, between a leading end and a trailing end of said rib, so that the linear screw rod does not substantially protrude from under the rib, in particular from a trailing end of the rib. In this way, a relatively compact actuation system can be obtained, which can substantially entirely be located aft of an airfoil's rear spar. The wing comprises the airfoil, forming a fixed part of the wing, and the flap, forming a movable part of the wing.

A leading end of said linear screw rod can advantageously be connectable with a drive unit. As an example, the drive unit can provide a linkage between for example a spanwise drive shaft, or any other component transferring or providing actuation power, in the airfoil and the linear screw rod, and can for example include transmission shafts and a bevel gear set to transform the rotational motion of the power input into rotation of the chordwise linear screw rod, typically enabling an increase in torque and decrease in rotation speed as well. Other types of drive units may be provided. For example, instead of using a single central driveshaft for driving all the actuation systems, each actuation system may be provided with its individual drive unit. Many variants are possible.

The linear screw rod is preferably threaded such that upon rotation of said screw rod, the carriage is movable along said linear screw rod, as such a rotational movement of the screw rod can be transmitted to a translational movement of the carriage along the screw rod.

For example, a trailing end of said linear screw rod can be movably connected to a trailing end of said rib, wherein preferably said trailing end of said linear screw rod is configured to move in a direction which is substantially transverse to said linear screw rod during adjustment of the trailing edge high-lift device along the curved track. The movable connection of the trailing end to the rib allows in a simple, yet stable, manner the high-lift device to follow a curved track. In particular, in a retracted position and in a fully deployed position of the high-lift device, when the carriage is near a leading or trailing end of the track, the trailing end of the linear screw rod can be positioned at a distance from the rib, while still being connected to the rib, for example via a guiding rod, whereas in an intermediate or semi-deployed position of the high-lift device, when the carriage is in between said leading and trailing edge of the screw rod, the trailing end of said linear screw rod can move up, for example along a guiding rod, towards the rib, so as to allow the high-lift device to follow the curved track. Preferably, the trailing end of the linear screw rod is a free hanging trailing edge, such that the trailing end of the screw rod can freely move upward and downward with respect to the rib during adjustment of the trailing edge high-lift device along the track.

In a preferred embodiment, the leading end of said linear screw rod can hinge around an axis substantially parallel to the rib enabled by a pivoting connection with said rib. The leading end of the linear screw rod can then be supported by a hinge mount and via the hinge mount be connected to the rib. The - inevitable - movement of the linear screw rod during actuation, can thus be supported and hinging of the screw rod is facilitated by the hinge mount. The hinge mount of the leading end of said linear screw allows in a simple, yet stable, manner the high-lift device to follow the curved track, as well as allows a reliable load transfer between the linear screw rod and the rib or further to the airfoil structure.

The connection element can advantageously include a roller assembly configured to roll along the rib's curved track. The roller assembly can for example include at least one, and preferably two or more rollers to provide a smooth movement of the connection element, and thus of the flap, along the curved track. Preferably, two rollers are located on one side of a connection element to reduce loads on the connection element. Alternatively, the connection element can include a sliding assembly to guide the connection element along said curved track in a sliding engagement between the connection element and the rib's track.

More advantageously, the rib can be configured to be in contact with a lateral support assembly on the trailing edge high-lift device. The lateral support assembly may include at least one, preferably two or more, support elements, for example rollers or sliding pads, arranged to move, for example roll or slide, along a lateral contact surface of said rib to provide lateral stability to the high-lift device. Alternatively, said lateral support assembly may also be located on the connection element. Each-lateral support element, preferably two side rollers or sliding pads per side, should preferably be arranged to support the total side load to assure fail safety and avoid skewing. Said lateral support elements are preferably mounted on the high-lift device or on the connection element at a distance from each other. The lateral contact surface on the rib may for example be a lower flange of the rib, any other suitable surface on the rib, or any additional part mounted on said rib to provide an adequate lateral contact surface.

The curved track can preferably be provided by a groove in at least one lateral side of said rib. As a groove can provide contact with the roller assembly on more than one side, when a roller of a roller assembly rolls in a groove, a groove can provide a good load transfer. Alternatively, the curved track can be provided by a track surface on the rib, on which a roller assembly can roll.

The track can advantageously extend over approximately the entire length of the rib, allowing a maximal deployment of the trailing edge high-lift device. More advantageously, the track can be entirely curved, preferably having a single radius of curvature. The curvature of the track allows a deployment of the high-lift device, for example in a landing configuration, rearwardly and downwardly in a single movement, opening a slot for increased lift and advantageous additional drag slowing down the aircraft as wanted in that flight phase. At the same time, the curved, preferably circular, motion allows the high-lift device to be brought into an intermediate, semi-deployed position, for example for take-off, in which a gap between the trailing edge high-lift device and at least on side of the airfoil, preferably both upper and lower side, in chordwise direction can be minimized or even avoided. Advantageously, in the semi-deployed take-off position, there is approximately no or limited gap between the high-lift device and the airfoil in chordwise direction. Preferably, the high-lift device surface aligns as smooth as possible with the airfoil surface to provide for an optimal wet area and optimal aerodynamic characteristics. To improve the alignment, often the high-lift device and/or the actuation system can be rigged or directed prior to installation to adjust the high-lift device and/or actuation system to a position of optimal alignment of the high-lift device with respect to the airfoil. Advantageously, an end of the airfoil, preferably both upper and lower end, can be provided with a sealing arrangement to seal any remaining slot between the airfoil and the high-lift device, in particular in semi-deployed position, to prevent an additional air flow from being created disturbing the aerodynamic flow around the wing. In fully deployed position, for landing, a slot or a gap between the high-lift device and the airfoil can be advantageous to generate additional drag.

It is preferred that the adjustment mechanism is further arranged to adjust the high-lift device to an intermediate position between the retracted position and the deployed position in which the high-lift device extends outside of the airfoil approximately without chordwise gap. In the direction of flight, the high-lift device is approximately adjacent to the airfoil, such that a limited chordwise gap or approximately no chordwise gap is obtained between the high-lift device and at least one side of the airfoil, preferably both upper and lower side. As such the lift generating aerodynamic surface can be increased while limiting negative effects of a gap, in particular additional drag during take-off, as e.g. known from slotted flaps. This is advantageous in terms of fuel consumption, as the lift-to-drag ratio during take-off can be increased compared to state of the art single or double slotted flaps which always open a slot with the wing in take-off configuration. Preferably, a continuous, substantially gapless aerodynamic surface can be obtained on at least one side of the wing, preferably on both upper and lower side.

Further, the invention may provide for an airfoil trailing edge high-lift device according to the features of claim 13. The trailing edge high-lift device comprises at least one flap, wherein said flap is movable between a retracted position and at least one deployed position, and is arranged to be actuated by an actuation system according to a first aspect of the invention, providing one or more of the above-mentioned advantages. As an example, the trailing edge high-lift device can for example be embodied as a flap, preferably as a so-called "large or enlarged flap", of which a flap chord is longer than for example 30% of a clean wing chord, preferably between approximately 30 % to approximately 40 % of the clean wing chord. It is to be understood that a "large" flap is dependent on the size and shape of the wing. Alternatively and/or additionally, a large flap may be understood to be a flap for which in semi-deployed take-off position it is approximately gapless with respect to the airfoil.

At least one lateral side, preferably both-lateral sides, of said at least one trailing edge high-lift device can be arranged to engage the actuation system, in particular a connection element of the actuation system. The connection element of the actuation system can be connected to a lateral side of the high-lift device, for example at 0% and 100% of the high-lift device's width, and not at for example 25% or 75% of said width, as is commonly the case with prior art devices. The high-lift device can be connected with the connection element via connection means known to the person skilled in the art. So, advantageously, two actuation systems per high-lift device may be provided, one actuation system per side of the high-lift device, in spanwise direction. Due to the configuration of the actuation system and/or the positioning of the actuation system, a gap in spanwise direction between adjacent high-lift devices may remain present.

Advantageously, an upper side of said high-lift device is substantially flush with an upper side in spanwise direction of the at least one rib of the actuation system, in particular in retracted position of the high-lift device. The actuation system for the high-lift device can thus be located smoothly in between two high-lift devices, mainly in retracted position. As such, during cruise, when the high-lift device is retracted, a flush aerodynamic surface can be obtained. In this way, a compact system with an optimal aerodynamic performance can be obtained.

More advantageously, said high-lift device is brought into an intermediate, semi-deployed position, for example for take-off, in which a gap between the trailing edge high-lift device and at least on side of the airfoil, preferably both upper and lower side, in the chordwise direction can be minimized or even avoided.

The present invention will be further elucidated with reference to a drawing. The figures in the drawing are given by way of exemplary embodiments. In the drawing:
Figures 1a, 1b and 1c show perspective opened-up views on an airfoil's trailing edge provided with a high-lift device in a retracted, semi-deployed and deployed position respectively;
Figures 2a, 2b and 2c show schematic side views of a preferred embodiment of an actuation system for the trailing edge high-lift device of Figures 1a, 1b and 1c according to the invention in a retracted, semi-deployed and deployed position respectively;
Figures 3 shows a perspective view on a connection element of the preferred embodiment of the actuation system of Figures 2a, 2b and 2c;
Figure 4 shows a perspective view on a rib of the preferred embodiment of the actuation system of Figures 2a, 2b and 2c;
Figure 5 shows a schematic side view on part of the connection element of Figure 3;
Figure 6 shows a perspective view on a linear screw rod and a carriage of the preferred embodiment of the actuation system of Figures 2a, 2b and 2c;
Figure 7 shows a perspective side view on part of the rib of Figure 4;
Figures 8a and 8b show an opened-up perspective top and perspective bottom view respectively on an airfoil's trailing edge provided with a high-lift device in retracted position (cruise) and a preferred embodiment of an actuation system according to the invention;
Figure 9 shows a perspective opened-up view on the airfoil's trailing edge of Figures 8a and 8b in a fully deployed position (landing);
Figure 10 shows a schematic side view on a fairing including a preferred embodiment of an actuation system for a trailing edge high-lift device according to the invention;
Figure 11 shows a perspective top view of a part of an airfoil;
Figure 12 shows a perspective opened-up side view on an airfoil's rear spar to which a preferred embodiment of an actuation system according to the invention is attached;
Figure 13 shows an opened-up top view on a fairing containing a preferred embodiment of an actuation system according to the invention;
Figure 14 shows a bottom perspective view of an embodiment of the actuation system according to the invention.

In the drawing, the figures are given merely as a schematic representation of the invention. Corresponding elements are designated with corresponding reference signs.

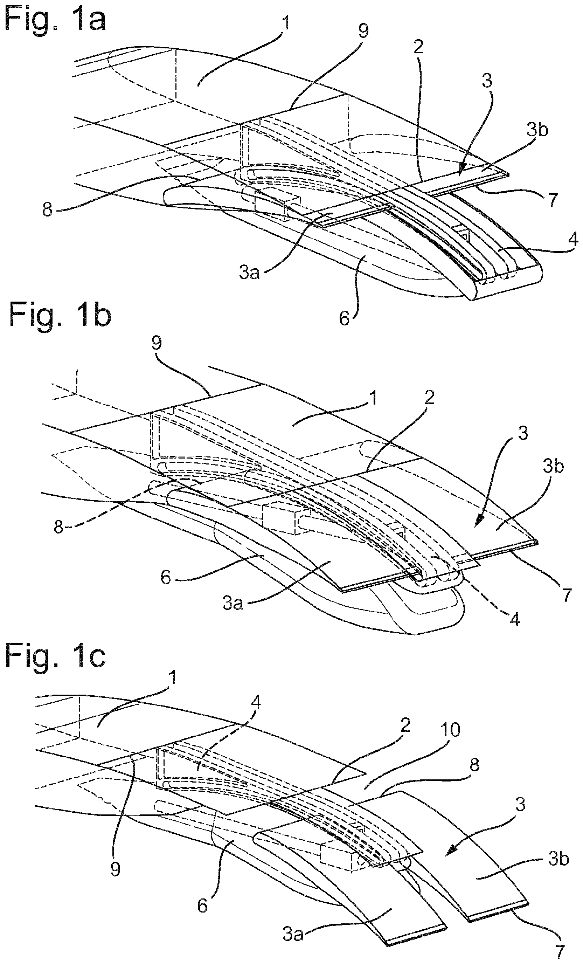

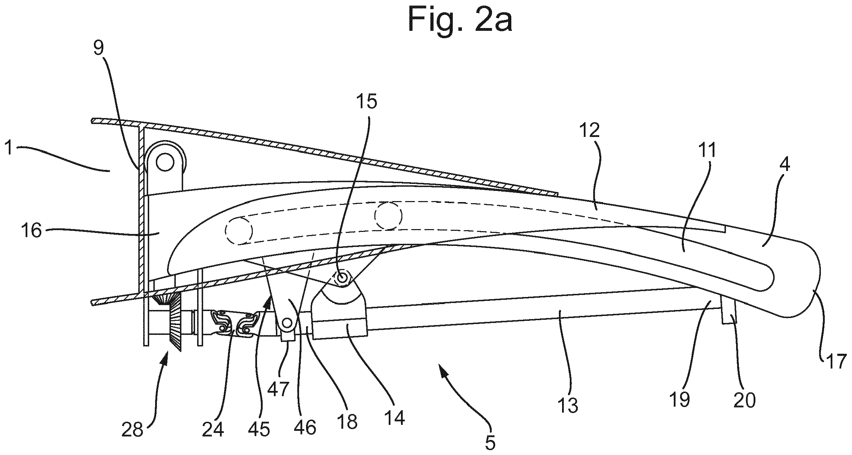

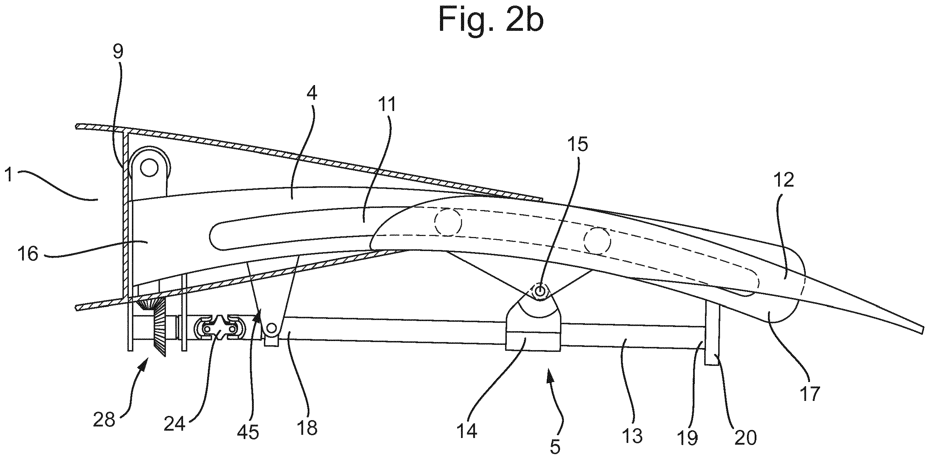

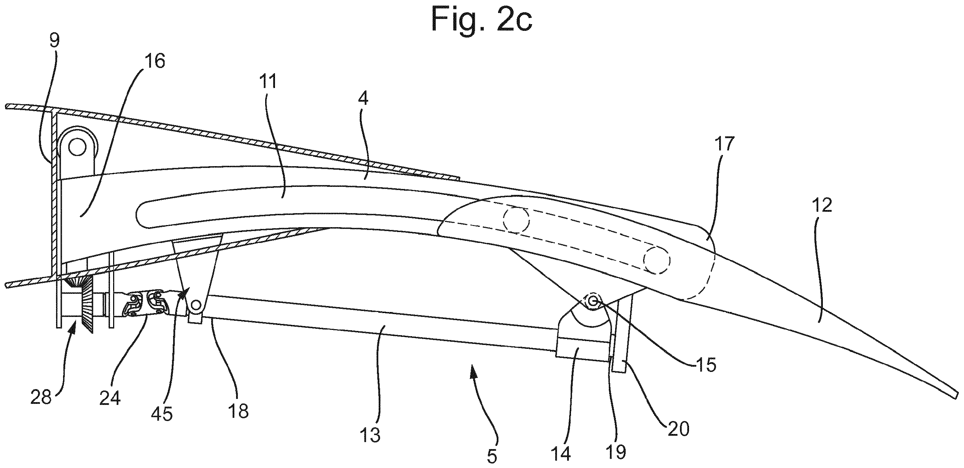

Figures 1a, 1b and 1c show perspective opened-up views on an airfoil's 1 trailing edge 2 provided with a high-lift device 3, for example a flap, with the trailing edge high-lift device 3 in a retracted (Figure 1a), semi-deployed (Figure 1b) and deployed (Figure 1c) position respectively. In the retracted position, which is commonly used during cruise of the aircraft, the trailing edge high-lift device 3 is substantially partly inside the airfoil, i.e. a major part of the high-lift device is inside the airfoil 1, whereas an aft edge 7 of the high-lift device 3 may remain behind the airfoil's trailing edge 2, as can be seen in Figure 1a. In the embodiment of Figures 1a, 1b and 1c, the trailing edge high-lift device 3 includes two flaps 3a, 3b, arranged to be actuated by an actuation system 5, as shown in Figure 2a, 2b, 2c, in between which flaps 3a, 3b a rib 4 of an actuation system 5 is situated, which actuation system 5 is partly covered by a fairing 6. The rib 4 is attached to the airfoil's rear spar 9. The adjustment mechanism of the actuation system 5 can be arranged to adjust the high-lift device 3 to an intermediate position between the retracted position and the deployed position. In this intermediate or semi-deployed position, as depictured in Figure 1b, a front edge 8 of the trailing edge high-lift device 3 is still partly inside the airfoil 1 whereas a major part of the high-lift device 3 is deployed behind the trailing edge 2, extending outside of the airfoil 1. This semi-deployed position is generally used during take-off to provide more lift to the aircraft. In this semi-deployed position, there may be a slot between a front edge 8 of the high-lift device 3 and the airfoil's trailing edge 2 depending on the flap structure, but preferably, the trailing edge high-lift device 3 and the actuation system 5 are configured to enable deployment in this intermediate position approximately without chordwise gap between the high-lift device 3 and the airfoil 1. Advantageously, a sealing arrangement may be provided to seal off any remaining slot or gap between the high-lift device and the airfoil when deployed.

During landing, the high-lift device 3 is generally substantially entirely deployed behind the airfoil's trailing edge 2, mostly slightly downwardly, resulting in a slot 10 between the airfoil's trailing edge 2 and the front edge 8 of the high-lift device 3.

Figures 2a, 2b and 2c show schematic side views of a preferred embodiment of an actuation system 5 for the trailing edge high-lift device 3 of Figures 1a, 1b and 1c according to the invention in a retracted, semi-deployed and deployed position respectively. The actuation system comprises at least one rib 4 which is mountable to an airfoil 1, wherein the rib 4 comprises a curved track 11 along which the trailing edge high-lift device 3 is adjustable between a retracted position (Figure 2a) and at least one deployed position, preferably two deployed positions (Figures 2b and 2c). The rib can preferably be mounted to an airfoil's rear spar 9 and extend rearwardly. The actuation system further comprises an adjustment mechanism arranged to adjust the trailing edge high-lift device 3 along the curved track 11. The adjustment mechanism comprises a connection element 12 which is mountable to the trailing edge high-lift device 3 and arranged to provide a movable connection of said trailing edge high-lift device 3 to the rib 4. The adjustment mechanism further comprises a linear screw rod 13 and a carriage 14 which is movable along said linear screw rod 13, wherein said carriage 14 is hinge-connected to said connection element 12, in particular in a hinged connection 15. The hinged connection 15 between said carriage 14 and said connection element 12 is located substantially below said track 11. Also the rest of the adjustment mechanism, in particular the linear screw rod 13 and the carriage 14, is substantially located below said track 11, whereas the connection element 12 is located substantially flush with and/or below said track 11. So the entire adjustment mechanism does not substantially extend above the curved track 11. As such a compact actuation system can be obtained without disturbing the airflow over the upper surface of the airfoil 1. The linear screw rod 13 is substantially entirely located between a leading end 16 and a trailing end 17 of said rib 4. The linear screw rod 13 may extend slightly forwardly in front of the leading end 16 of the rib 4, for example such that the leading end 18 of the screw rod 13 is connectable with a drive unit, but the linear screw rod 13 does not extend rearwardly behind the trailing end 17 of the rib 4.

In these figures 2a, 2b, 2c is shown that a trailing end of said linear screw rod 19 is movably connected to a trailing end 17 of said rib, wherein preferably said trailing end 19 of said linear screw rod 13 is configured to move in a direction which is substantially transverse to said linear screw rod 13 during adjustment of the trailing edge high-lift device 3 along the curved track 11. The trailing end 19 of the linear screw rod 13 can for example be connected with a guiding rod 20, which is connected to a trailing end 17 of the rib 4. Said guiding rod 20 may extend substantially vertically and downwardly from said rib 4, and may for example comprise a groove in which the trailing end 19 of the linear screw rod 13 may be received. Said trailing end 19 of said linear screw rod 13 may freely move up and down in said guiding rod 20 during motion of the connection element 12 and the high-lift device 3 along the curved track 11. In another embodiment, more preferably, the guiding rod 20 can be absent and the trailing end 19 of the screw rod 13 is a free hanging trailing edge, such that it can freely move upward and downward with respect to the rib 4. Obviating the guiding rod 20 can be advantageous for weight saving and material saving.

In a cruise configuration or in a landing configuration, the trailing end 19 of the screw rod 13 may be at a distance from the trailing end 17 of the rib 4, as shown in figures 2a and 2c, whereas in a take-off configuration, as shown in figure 2b, the trailing end 19 of the screw rod 13 may be moved up towards the trailing end 17 of the rib 4.

The leading end 18 of the screw rod 13 is connected to a gear system 28 being driven by a drive unit, not shown, via a universal joint 24. Further, the leading end 18 of the screw rod 13 is connected to the rib 4 via a hinge mount 45. The hinge mount 45 supports the screw rod 13, in particular the leading edge 18 of the screw rod 13, during movement. The hinge mount 45 comprises a first bracket 46 in which a second bracket 47 is hingedly mounted, such as pin-jointed or pivot-mounted. The first bracket 46 can be arranged as a U-shaped bracket having two legs, of which one leg is shown in the side view of figures 2a, 2b, 2c. The second bracket 47 can be arranged as a ring surrounding the screw rod 13, but can have any other shape. The second bracket 47 is hingedly mounted to the first bracket 46 and can hinge or pivot around an axis substantially parallel to the rear spar 9, or substantially transverse to the first bracket 46. As such, the screw rod 13 can pivot around the said axis and can be supported during the actuation movement. The hinge mount 45 can provide for support as well as for load transfer between the screw rod 13 and the rib 4.

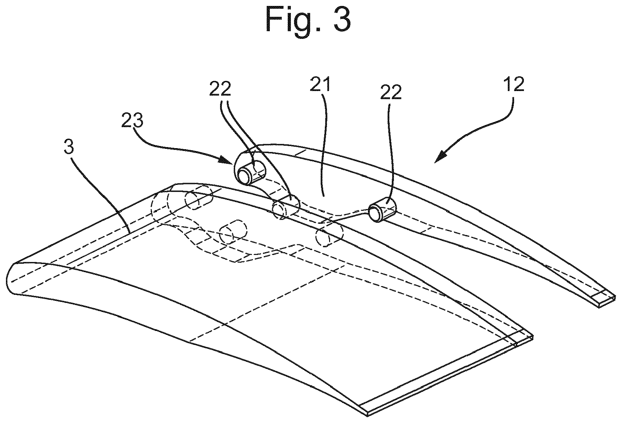

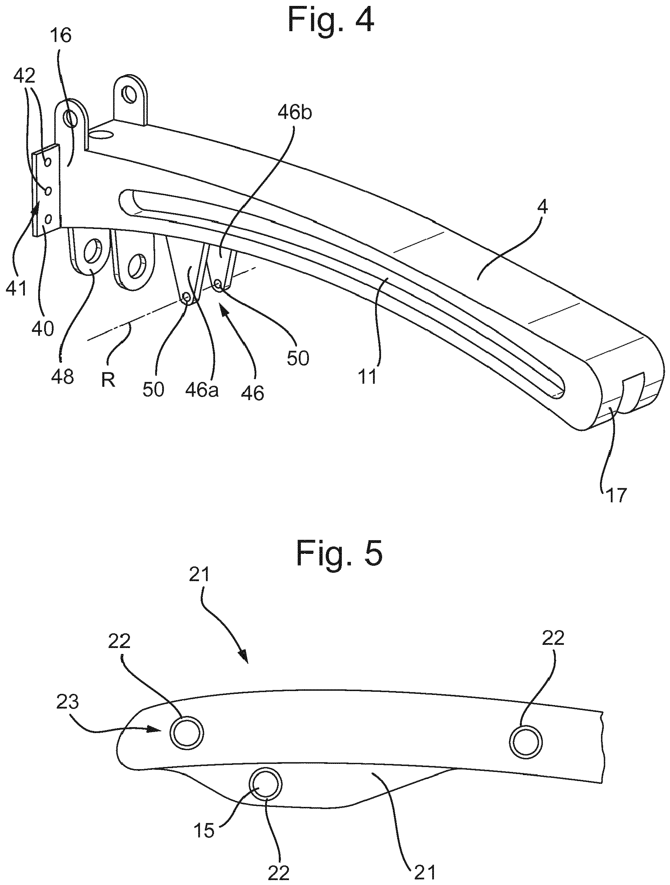

Figure 3 shows a perspective view on a connection element 12 of the actuation system 5. The connection element 12 is mountable to the trailing edge high-lift device 3, of which at least one lateral side, preferably both-lateral sides, is arranged to engage the actuation system 5, in particular the connection element 12. In this embodiment, the connection element 12 includes a leading end 21 including an enlargement, as can also be seen in Figure 5 showing a schematic side view on part of the connection element 12 of Figure 3. The connection element 12 preferably extends along an entire lateral side of the high-lift device 3. Connection with the high-lift device can be made by means known to the person skilled in the art. The connection element 12 is arranged to provide a movable connection of said trailing edge high-lift device 3 to the rib 4. Thereto, the connection element 12 can include a roller assembly 23, comprising rollers 22, configured to roll along the rib's curved track 11. The rollers 22 can be arranged to move in a recessed track in the rib 4, as is shown in Figure 4. Also, other arrangement for guiding the rollers 22 on the rib 4 may be possible,

Figure 4 shows a perspective view of a rib 4 of the actuation system of Figures 2a, 2b and 2c. The rib 4, more specifically the leading end 16 of the rib 4, is arranged to be mounted to an airfoil's rear spar 9. Here, a mounting structure 40 is provided comprising a lip 41 with holes 42 there through. Through holes 42 conventional fastening members such as screws or rivets can be inserted to connect the rib 4 to the rear spar 9. The rib 4 comprises a curved track 11, which is provided by a groove in at least one lateral side of said rib 4. The rib 4 can also be arranged to be placed in between two flaps, in which case each of the two lateral sides of the rib 4 can comprise a curved track 11, preferably a groove. Instead of a groove, the track 11 can be embodied as a track surface, or as a flange. The track 11 can extend over approximately the entire length of the rib 4, leaving however some room for a stopping mechanism, which in case of a groove as track 11, implies that the groove ends just before an end of the rib 4, such that rollers 22 of a roller assembly 23 engaging the groove 11 cannot get out of the groove. The track 11 is preferably entirely curved, preferably having a single radius of curvature, for example being an arc of a large circular shape with a centre point for example being located approximately 2 m below the airfoil's trailing edge. The rib 4 further is provided with a hinge mount 45, as explained above. In figure 4, the first bracket 46 of the hinge mount 45 is shown, here embodied as a U-shaped bracket having two legs 46a and 46b. Each leg 46a, 46b is provided with an opening 50 in which the second bracket 47 can fit. The axis R around which the screw rod 13 is hingedly mounted is denoted as R and is substantially transverse to the bracket 46, preferably through the openings 50. Further, a bracket 48 is shown in which the gear system 28 can be mounted.

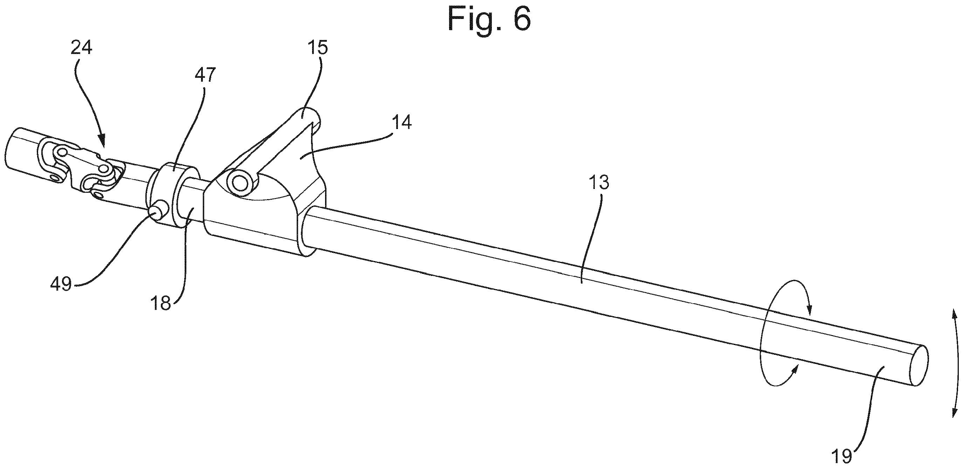

Figure 6 shows a perspective view on a linear screw rod 13 and a carriage of the preferred embodiment of the actuation system of Figures 2a, 2b and 2c. The linear screw rod can include an external thread, which can be engaged by an internal thread in the carriage. Upon rotation of the screw rod, the carriage14 can be moved back and forth along the screw rod, dragging along the high-lift device 3 connected to the carriage 14 via the connection element 12. The carriage 14 comprises a substantially triangularly shaped upper part including a hole configured to function as the hinged connection 15 to form a hinged connection with the connection element 12, in particular with the enlarged part 21 of the connection element 12. In this embodiment, the trailing end 19 of the linear screw rod 13 is freely movable, without the use of a guiding rod. As such the trailing end 19 of the linear screw rod 13 can move unconstrained with respect to the rib 4, as the main forces are guided via the hinge mount 45 to the rib 4. The leading end 18 of the linear screw rod 13 is preferably supported by a hinge mount 45 to for example rib 4. Here, the second bracket 47 is shown of the hinge mount 45. The second bracket 47 is here ring-shaped to receive the leading end 18 of the screw rod 18, but can have any other shape arranged to receive the leading end 18. The ring-shaped bracket 47 is provided with protrusions 49 that fit in openings 50 of the first bracket 46. The combination of the hinge mount 45 and the free movement of the trailing end 19 of the linear screw rod 13, both with the connection element 12, allows the carriage 14, and thus the high-lift device 3, to follow a curved track 11 while being driven by a linear screw rod 13.The connection of the leading end 18 of the linear screw rod 13 with a drive unit preferably includes a universal U-joint 24 to allow both rotation and moving up and down of the linear screw rod 13. The universal joint 24 can be connected with a well-known drive unit. The combination of the hinged connection 15 of the carriage 14 and the hinging of the leading end 18 of linear screw rod 13, both with the connection element 12, allows the high-lift device 3 to follow a curved track 11 while being driven by a linear screw rod 13. As there may be multiple flaps and multiple actuation system 5 along an airfoil 1, the linear screw rod 13 may vary in length, for example in a range of 600 - 1200 mm, depending on where the actuation system is located along an airfoil 1, with the longest linear screw rod 13 being closest to the inner airfoil 1.

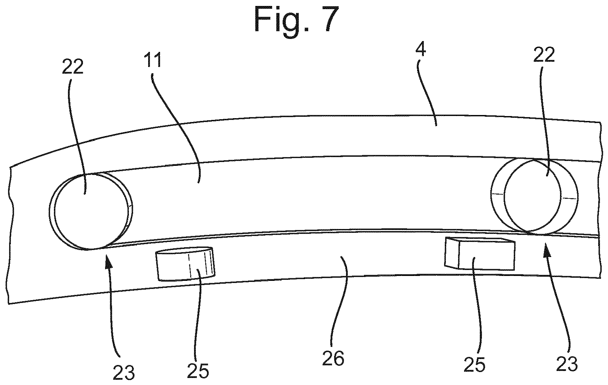

Figure 7 shows a perspective side view on part of the rib of Figure 4. The connection element 12 preferably comprises a roller assembly 23, for example including two rollers 22 on each side placed at a distance from each other towards a trailing end of the connection element 12. In this embodiment, the roller assembly 23 of the connection element 12 is shown with respect to the rib 4. The rollers 22 of the roller assembly 23 are configured to fit into the grooved track 11 on the rib 4. The rib 4 can also be configured to be in contact with a lateral support assembly 25 on the trailing edge high-lift device 3. Said lateral support assembly 25 can for example include two side rollers or sliding pads configured to engage a lateral contact surface on the rib 4, for example a lower flange 26 under the grooved track 11. Many variants are possible here.

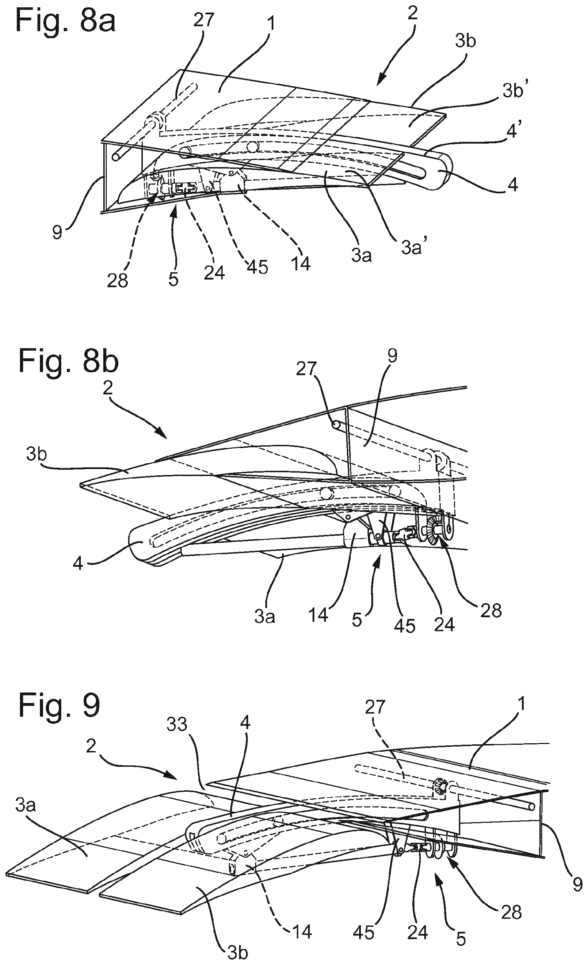

Figures 8a and 8b show an opened-up perspective top and perspective bottom view respectively on an airfoil's trailing edge 2 provided with a high-lift device 3 and a preferred embodiment of an actuation system according to the invention. The system is in a retracted or stowed position, as is the case during cruise of an airplane. In particular, in figure 8a it can be seen that the upper side 4' of the rib 4 is substantially flush with the upper side 3a', 3b' of the high-lift devices 3a, 3b as seen in spanwise direction. So, during cruise, which is the main stage of a flight, the upper surfaces of the high-lift devices 3a, 3b, the rib 4 and the airfoil 1 substantially form a smooth aerodynamic surface which may improve the aerodynamic performance of the wing. Also, in the embodiment shown in figures 8a and 8b, the trailing end 19 of the screw rod 13 is a free hanging trailing end, such that it can move unconstrained, while the main forces are supported by the hinge mount 45 at the leading end 18 of the screw rod 13.

Figure 9 shows a perspective opened-up view on the airfoil's trailing edge 2 of Figures 8a and 8b in a fully deployed position, usually the landing configuration. The rib 4 is connected to the rear spar 9 of the airfoil 1. The high-lift device 3 includes two flaps 3a, 3b, which are located on either side of the rib 4 and are movable along a track 11 embodied as a groove on both-lateral sides of the rib 4. The adjustment mechanism of the actuation system configured to actuating the flaps 3a, 3b as described above is located substantially below the rib 4. The universal U-joint 24 at the leading end 18 is connected to for example a drive shaft 27 extending spanwisely in the airfoil 1 via a gear system 28 arranged to transfer transmission from for example the drive shaft 27 to the linear screw rod 13. Many variants of the gear system and/or drive unit are possible. A conventional drive unit may comprise a central drive shaft for driving the gear system 28. Rotation of the drive shaft is transferred to a vertical transmission shaft via a first beveled gear, which can both be located at the leading end 16 of the rib 4. Via a second beveled gear, rotation can be transmitted in a way known to the person skilled in the art to the universal U-joint 24 and the linear screw rod 13. It is understood that other drive units may be possible as well, for example a drive unit that is dedicated for a single actuation system. Also, instead of a drive shaft, other drive means may be provided. In figure 9 is shown the flaps 3a, 3b in fully extended position with respect to the airfoil 1, i.e. the landing position. The rollers 22 are at the end of the track 11 and there is a gap or slot 33, in chordwise direction, between the airfoil 1 and the high-lift device 3. Such a gap or slot 33 can be advantageous during landing, for example for generating additional airflow there through to provide additional drag.

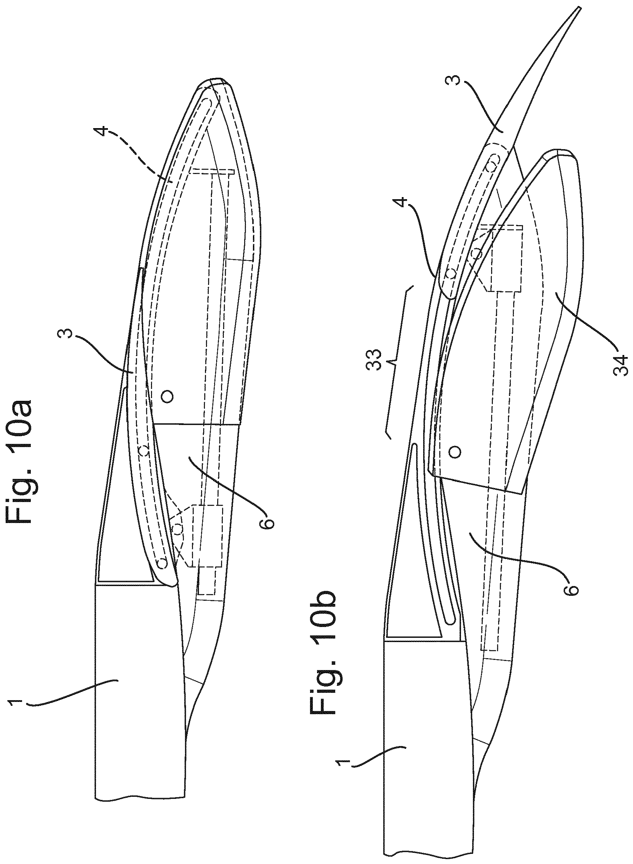

Figures 10a and 10b show a schematic side view on a fairing including a preferred embodiment of an actuation system 5 for a trailing edge high-lift device 3 according to the invention. Part of the actuation system of a trailing edge high-lift device 3 is usually aerodynamically covered by a fairing 6 attached to the airfoil 1 to protect the actuation system and to improve aerodynamic performance. The actuation system 5 allows further improving the airfoil's aerodynamic performance in that the actuation system is rather compact, enabling the use of a relatively low drag fairing 6 of relatively small height, width and length, which additionally saves weight. Therefore, a trailing part 34 of the fairing 6 is preferably pivotally connected to the fairing 6, such that in a deployed position of the high-lift device 3 and the actuation system 5, corresponding to a landing configuration and shown in Figure 10b, the trailing end 34 of the fairing 6 pivots slightly downwardly to allow full deployment of the high-lift device 3. In figure 10a it can be seen that the high-lift device 3 is in retracted position, as for cruising, in which the high-lift device 3 extends substantially inside of the airfoil 1. Any slot that may be present between the airfoil 1 and the high-lift device 3 is sealed off by a sealing arrangement, in particular when the high-lift device 3 is in retracted or semi-deflected position, not shown here. Further, it can be seen in figure 10a that the upper surface of the high-lift device 3 is substantially flush with an upper surface of the airfoil 1 and with the upper surface of the rib 4. To obtain an optimal position of the high-lift device 3 with respect to the airfoil 1, the high-lift device 3 can typically be rigged prior to use, in a well known manner, e.g. using asymmetric bushings. As shown in figure 10b, when the high-lift device 3 is shown in fully deployed position, there is a gap or slot 33, in chordwise direction, between the airfoil 1 and the high-lift device. Such a gap, of course, is not intended to be sealed off by any sealing arrangement, but is intended to induce additional airflow there through during the landing phase. Due to the compact configuration of the actuation system 5, the fairing 6 can be embodied relatively compact as well, which is advantageous in terms of aerodynamic performance.

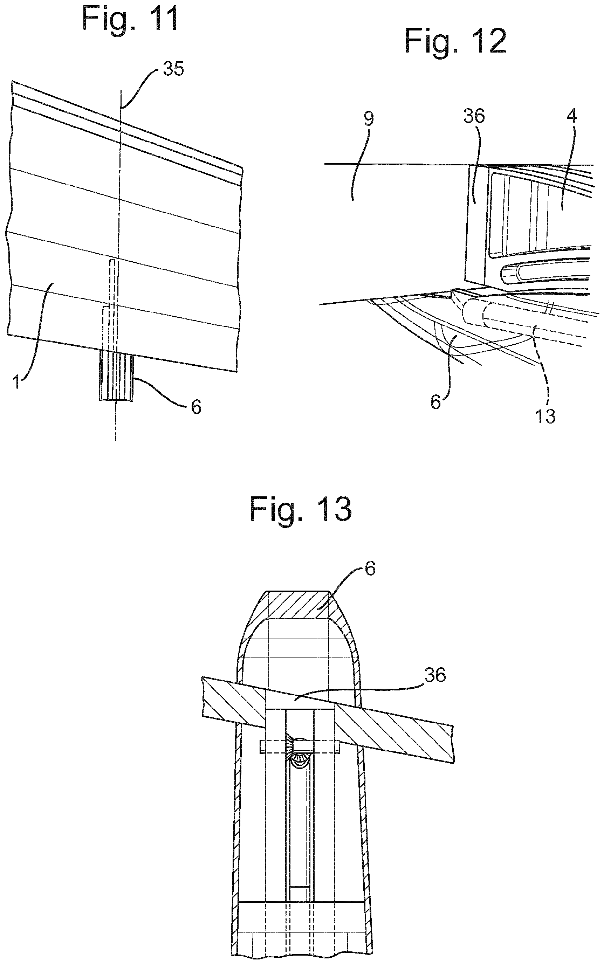

Another advantage of the compact actuation system according to the invention is that the fairing 6 can be placed substantially in the line of flight 35 rather than perpendicular to the rear spar 9, as illustrated in Figure 11 showing a perspective top view on part of an airfoil 1. Figure 11 shows a possible embodiment of an airfoil, or of a wing, which is of course different for a different wing choice.

Figure 12 shows a perspective opened-up side view on an airfoil's rear spar 9 to which a preferred embodiment of an actuation system according to the invention is attached. The substantially in line positioning of the fairing 6 is possible through the use of an intermediate position correcting block 36 between the leading end 16 of the rib 4 and the rear spar 9 to which the intermediate position correcting block 36 is attached. As can be seen in Figure 13, respectively showing an opened-up top view on a fairing 6 containing a preferred embodiment of an actuation system 5 according to the invention, and an enlargement of the leading end of the fairing of Figures 10a, 10b the intermediate position correcting block 36 has the shape of a trapezium seen from the top, having two substantially parallel lateral sides of which one is longer than the other. The skewed leading side of the block 36 can be attached to the rear spar 9 of the airfoil 1, whereas the trailing side of the block 36 can be attached to the leading end 16 of the rib 4.

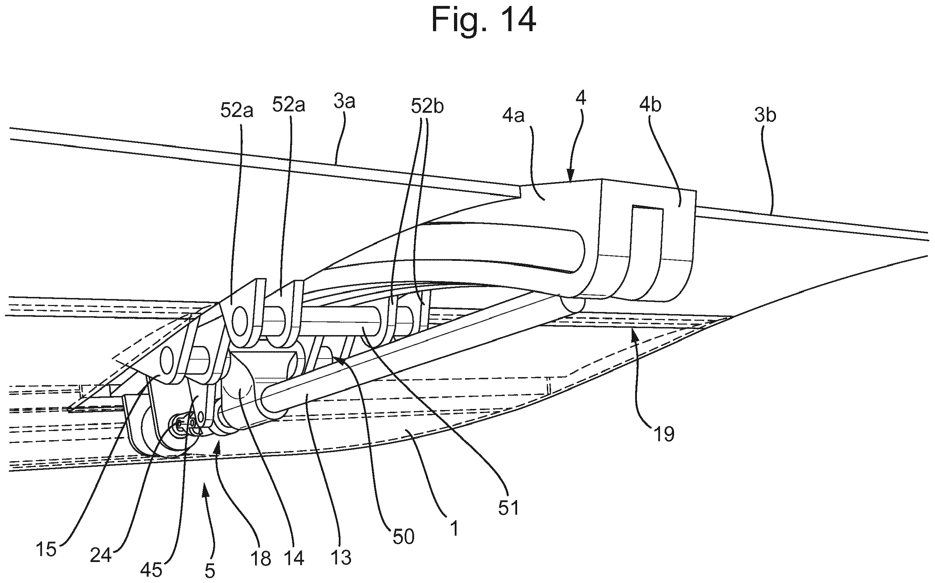

In figure 14 a further embodiment of the actuation system 5 is shown having the linear screw rod 13 which is driven at the leading end 18 and has a free hanging trailing end 19. At the leading end 18, the screw rod 13 is supported by the hinge mount 45. The carriage 14 is movable along the screw rod 13 and is hingedly connected to the rib 4 via the hinged connection 15. The hinged connection 15 here comprises a hinge pin 15a that is arranged through the carriage 14 and at both ends connected to the respective flaps 3a, 3b. The connection of the hinge pin 15 is done here with connection lugs, but other connections are possible as well. In addition, the actuation system 5 is here provided with a fail-safe system 50. The fail-safe system 50 provides for the support of one flap when the connection of the flap to its corresponding rib part is broken. For use, the rib 4 may be provided as two rib parts 4a, 4b extending in chordwise direction and connected to each other, usually via bolts, as to prevent that cracks from one rib part 4a, 4b can mitigate to the other rib part 4b, 4a. This is a well-known technique for introducing fail-safety into an aircraft system. When one rib part 4a, 4b has failed and/or the connection of the flap 3a, 3b to its corresponding rib part 4a, 4b is failed, the respective high-lift device 3a, 3b can be unsupported. Thereto, the fail-safe system 50 is arranged that provides a connection between the two adjacent flaps 3a, 3b without disturbing the actuation system 5. The fail-safe system 50 here comprises a fail-safe pin 51 extending underneath the rib 4 and between the two adjacent flaps 3a, 3b. The fail-safe pin 51 is at each end connected, here via lugs 52a, 52b to the respective flap 3a, 3b.

There is provided for an airfoil trailing edge high-lift device comprising at least one flap, wherein said flap is movable between a retracted position and at least one deployed position, and is arranged to be actuated by an actuation system comprising at least one rib which is mountable to an airfoil, wherein the rib comprises a track along which the trailing edge high-lift device is adjustable between a retracted position in which the trailing edge high-lift device is substantially partly inside the airfoil, and at least one deployed position in which the trailing edge high-lift device is substantially outside of the airfoil; comprisingan adjustment mechanism arranged to adjust the trailing edge high-lift device along the track.

For the purpose of clarity and a concise description, features are described herein as part of the same or separate embodiments, however, it will be appreciated that the scope of the invention may include embodiments having combinations of all or some of the features described. It may be understood that the embodiments shown have the same or similar components, apart from where they are described as being different.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage. Many variants will be apparent to the person skilled in the art. All variants are understood to be comprised within the scope of the invention defined in the following claims.

## Claims

1. Actuation system for an airfoil trailing edge high-lift device, comprising
- at least one rib which is mountable to an airfoil, wherein the rib comprises a curved track along which the trailing edge high-lift device is adjustable between a retracted position in which the trailing edge high-lift device is substantially partly inside the airfoil, and at least one deployed position in which the trailing edge high-lift device is substantially outside of the airfoil;
- an adjustment mechanism arranged to adjust the trailing edge high-lift device along the curved track, wherein the adjustment mechanism comprises a connection element which is mountable to the trailing edge high-lift device and arranged to provide a movable connection of said trailing edge high-lift device to the rib, wherein the adjustment mechanism further comprises a linear screw rod and a carriage which is movable along said linear screw rod, wherein said carriage is hinge-connected to said connection element.

2. Actuation system according to claim 1, wherein the hinged connection between said carriage and said connection element is located substantially below said track.

3. Actuation system according to any of the preceding claims, wherein said adjustment mechanism is substantially located below said track.

4. Actuation system according to any of the preceding claims, wherein the linear screw rod is substantially entirely located between a leading end and a trailing end of said rib.

5. Actuation system according to any of the preceding claims, wherein a leading end of said linear screw rod is mounted in a hinge mount.

6. Actuation system according to any of the preceding claims, wherein a trailing end of said linear screw rod is freely movable with respect to the rib, wherein preferably said trailing end of said linear screw rod is configured to move in a direction which is substantially transverse to said linear screw rod during adjustment of the trailing edge high-lift device along the curved track.

7. Actuation system according to any of the preceding claims, wherein the connection element includes a roller or sliding assembly configured to roll or slide along the rib's curved track.

8. Actuation system according to any of the preceding claims, wherein the rib is configured to be in contact with a lateral support assembly on the trailing edge high-lift device.

9. Actuation system according to any of the preceding claims, wherein the curved track is provided by a groove in at least one lateral side of said rib.

10. Actuation system according to any of the preceding claims, wherein the track extends over approximately the entire length of the rib.

11. Actuation system according to any of the preceding claims, wherein the track is entirely curved, preferably having a single radius of curvature.

12. Actuation system according to any of the preceding claims, wherein the adjustment mechanism is further arranged to adjust the high-lift device to an intermediate position between the retracted position and the deployed position in which the high-lift device extends substantially outside of the airfoil approximately without chordwise gap between the high-lift device and the airfoil.

13. Airfoil trailing edge high-lift device comprising at least one flap, wherein said flap is movable between a retracted position and at least one deployed position, and is arranged to be actuated by an actuation system according to any of the preceding claims.

14. Airfoil trailing edge high-lift device according to claim 13, wherein at least one lateral side, preferably both-lateral sides, of said at least one trailing edge high-lift device is arranged to engage the actuation system.

15. Airfoil trailing edge high-lift device according to claim 13 or claim 14, wherein an upper side of the at least one rib of the actuation system is substantially flush in spanwise direction with an upper side of said high-lift device.

16. Airfoil trailing edge high-lift device according to claim 13, 14 or 15, wherein said high-lift device in the semi-deployed position, in which the high-lift device is substantially outside of the airfoil for take-off, the high-lift device is substantially gapless positioned with respect to the airfoil in chordwise direction of the airfoil.

17. Airfoil trailing edge high-lift device according to claim 13,14, 15 or 16, wherein said high-lift device in the fully deployed position, in which the high-lift device is outside of the airfoil for landing, the high-lift device is positioned with respect to the airfoil with a gap in-between in chordwise direction of the airfoil.
